# EUROPEAN PATENT APPLICATION

(11) **EP 4 207 387 A1**
(43) Date of publication of application: **05.07.2023**
(21) Application number: 21861243.0
(22) Date of filing: 11.08.2021
(51) Int. Cl.: H01M 4/62, C08F 6/06, H01M 4/139, H01M 10/0562, H01M 10/058

(54) **METHOD FOR MANUFACTURING BINDER COMPOSITION FOR ALL-SOLID-STATE SECONDARY CELL, METHOD FOR MANUFACTURING SLURRY COMPOSITION FOR ALL-SOLID-STATE SECONDARY CELL, METHOD FOR MANUFACTURING SOLID-ELECTROLYTE-CONTAINING LAYER, AND METHOD FOR MANUFACTURING ALL-SOLID-STATE SECONDARY CELL**

(30) Priority: 31.08.2020 JP 2020146300
(71) Applicant: Zeon Corporation, Tokyo 100-8246 (JP)
(72) Inventor: MATSUO, Yusaku, Tokyo 100-8246 (JP)
(74) Representative: Maiwald GmbH
(86) International application number: PCT/JP2021/029677
(87) International publication number: WO 2022/044815

(57) **Abstract**

Provided is a method of producing a binder composition for an all-solid-state secondary battery with which it is possible to form a solid electrolyte-containing layer that can cause an all-solid-state secondary battery to display excellent output characteristics and cycle characteristics. The method of producing a binder composition for an all-solid-state secondary battery is a method of producing a binder composition for an all-solid-state secondary battery that contains a polymer and an organic solvent. This production method includes: a water removal step of using a desiccant that contains either or both of a group 13 element and a group 14 element to obtain a composition (X) that contains the polymer and the organic solvent and has a water content of 200 ppm or less; and a transition metal removal step of magnetically removing transition metal contained in the composition (X) to obtain the binder composition for an all-solid-state secondary battery.

## Description

### TECHNICAL FIELD

The present disclosure relates to a method of producing a binder composition for an all-solid-state secondary battery, a method of producing a slurry composition for an all-solid-state secondary battery, a method of producing a solid electrolyte-containing layer, and a method of producing an all-solid-state secondary battery.

### BACKGROUND

Demand for secondary batteries such as lithium ion secondary batteries has been increasing in recent years for various applications such as mobile information terminals, mobile electronic devices, and other mobile terminals, and also domestic small power storage devices, motorcycles, electric vehicles, and hybrid electric vehicles. The widespread use of secondary batteries in such applications has been accompanied by demand for further improvement of secondary battery safety.

All-solid-state secondary batteries in which a solid electrolyte is used instead of an organic solvent electrolyte having high flammability and high risk of catching fire upon leakage are attracting interest as secondary batteries having high safety. A solid electrolyte may be contained inside an all-solid-state secondary battery as a solid electrolyte-containing layer (electrode mixed material layer or solid electrolyte layer) in which components such as the solid electrolyte are bound by a binder, for example.

Formation of a solid electrolyte-containing layer is performed using a slurry composition for a solid electrolyte-containing layer that is produced using a binder composition containing a polymer as a binder and a solvent. An electrode mixed material layer, for example, can be formed by removing solvent from a slurry composition for an electrode mixed material layer that contains a binder composition, a solid electrolyte, and an electrode active material. Moreover, a solid electrolyte layer, for example, can be formed by removing solvent from a slurry composition for a solid electrolyte layer that contains a binder composition and a solid electrolyte.

There are instances in which a trace amount of water contained in a solid electrolyte-containing layer reacts with a solid electrolyte inside an all-solid-state secondary battery and causes deterioration of performance of the all-solid-state secondary battery. Accordingly, it is desirable to reduce the water content of a solid electrolyte-containing layer that is a constituent of an all-solid-state secondary battery from a viewpoint of improving performance of the all-solid-state secondary battery. For this reason, it is also desirable to reduce the water content of a binder composition that is used to produce a solid electrolyte-containing layer.

For example, Patent Literature (PTL) 1 reports that the amount of water contained in a binder composition is preferably less than 1,000 ppm.

### CITATION LIST

### Patent Literature

PTL 1: WO2017/047378A1

### SUMMARY

### (Technical Problem)

However, there is room for improvement of a solid electrolyte-containing layer formed using a slurry composition that contains the binder composition of the conventional technique described above in terms of causing an all-solid-state secondary battery to display excellent output characteristics and cycle characteristics.

Accordingly, one object of the present disclosure is to provide a method of producing a binder composition for an all-solid-state secondary battery with which it is possible to form a solid electrolyte-containing layer that can cause an all-solid-state secondary battery to display excellent output characteristics and cycle characteristics.

Another object of the present disclosure is to provide a method of producing a slurry composition for an all-solid-state secondary battery with which it is possible to form a solid electrolyte-containing layer that can cause an all-solid-state secondary battery to display excellent output characteristics and cycle characteristics.

Another object of the present disclosure is to provide a method of producing a solid electrolyte-containing layer that can cause an all-solid-state secondary battery to display excellent output characteristics and cycle characteristics.

Another object of the present disclosure is to provide a method of producing an all-solid-state secondary battery that can display excellent output characteristics and cycle characteristics.

### (Solution to Problem)

The inventor conducted diligent investigation with the aim of solving the problem set forth above. The inventor discovered that by using a specific desiccant to obtain a composition that contains a polymer and an organic solvent and has a water content of not more than a specific value, and by subsequently magnetically removing transition metal contained in the composition, it is possible to produce a slurry composition for an all-solid-state secondary battery with which it is possible to form a solid electrolyte-containing layer that can cause an all-solid-state secondary battery to display excellent output characteristics and cycle characteristics. In this manner, the inventor completed the present disclosure.

Specifically, the present disclosure aims to advantageously solve the problem set forth above, and a presently disclosed method of producing a binder composition for an all-solid-state secondary battery is a method of producing a binder composition for an all-solid-state secondary battery that contains a polymer and an organic solvent, comprising: a water removal step of using a desiccant that contains either or both of a group 13 element and a group 14 element to obtain a composition (X) that contains the polymer and the organic solvent and has a water content of 200 ppm or less; and a transition metal removal step of magnetically removing transition metal contained in the composition (X) to obtain the binder composition for an all-solid-state secondary battery. Through a method of producing a binder composition for an all-solid-state secondary battery that, in this manner, includes a step of using a specific desiccant to obtain a composition that contains a polymer and an organic solvent and has a water content of not more than the specific value set forth above and a step of magnetically removing transition metal contained in the composition, it is possible to produce a slurry composition for an all-solid-state secondary battery with which it is possible to form a solid electrolyte-containing layer that can cause an all-solid-state secondary battery to display excellent output characteristics and cycle characteristics.

Note that the "water content" referred to in the present disclosure can be measured by a method described in the EXAMPLES section of the present specification.

In the presently disclosed method of producing a binder composition for an all-solid-state secondary battery, transition metal content of the binder composition for an all-solid-state secondary battery is preferably 5 ppm or less. By restricting the transition metal content of the produced binder composition to not more than the specific value set forth above, it is possible to further improve cycle characteristics of an all-solid-state secondary battery that includes a solid electrolyte-containing layer formed using the binder composition.

Note that the "transition metal content" referred to in the present disclosure can be measured by a method described in the EXAMPLES section of the present specification.

In the presently disclosed method of producing a binder composition for an all-solid-state secondary battery, the desiccant preferably includes either or both of an -O-Si-O- structure and an -O-Al-O- structure. By using a desiccant that includes either or both of an -O-Si-O- structure and an -O-Al-O- structure, it is possible to further reduce the water content of the produced binder composition and to thereby further improve output characteristics of an all-solid-state secondary battery that includes a solid electrolyte-containing layer formed using the binder composition.

In the presently disclosed method of producing a binder composition for an all-solid-state secondary battery, the organic solvent preferably has an SP value of not less than 5 and not more than 9.5. By using an organic solvent having an SP value that is within the specific range set forth above, it is possible to further reduce the water content of the produced binder composition and to thereby further improve output characteristics of an all-solid-state secondary battery that includes a solid electrolyte-containing layer formed using the binder composition. Moreover, by using an organic solvent having an SP value that is within the specific range set forth above, it is possible to cause good dispersion of a solid electrolyte in a slurry composition that is produced using the produced binder composition. Furthermore, by using an organic solvent having an SP value that is within the specific range set forth above, it is possible to prevent degradation of a solid electrolyte caused by the organic solvent and to inhibit deterioration of output characteristics of an all-solid-state secondary battery.

Note that the term "SP value" used in the present disclosure refers to a solubility parameter.

The SP value can be calculated by a method described in "Hansen Solubility Parameters: A User's Handbook, 2nd Ed. (CRC Press)".

The SP value of an organic compound can be estimated from the molecular structure of the organic compound. Specifically, calculation can be performed using simulation software that can calculate an SP value from a SMILE formula (for example, HSPiP (http=//www.hansen-solubility.com)). This simulation software determines the SP value based on the theory described in "Hansen Solubility Parameters: AUser's Handbook, Second Edition, Charles M. Hansen".

Note that units of SP values in the present specification are taken to be "(cal/cm³)^{1/2}".

In the presently disclosed method of producing a binder composition for an all-solid-state secondary battery, the polymer preferably includes one or more selected from the group consisting of a vinyl cyanide monomer unit, a (meth)acrylic acid ester monomer unit, an aromatic vinyl monomer unit, an aliphatic conjugated diene monomer unit, and an alkylene structural unit. By using a polymer that includes a specific monomer unit and/or structural unit set forth above, it is possible to improve battery characteristics of an all-solid-state secondary battery that includes a solid electrolyte-containing layer formed using the produced binder composition.

Note that in the present disclosure, "(meth)acryl" is used to indicate "acryl" and/or "methacryl".

In the presently disclosed method of producing a binder composition for an all-solid-state secondary battery, the water removal step preferably includes a step of removing water from a pre-dehydration composition (Y) that contains the polymer and the organic solvent using the desiccant to obtain the composition (X). By using the desiccant to remove water from a pre-dehydration composition (Y) containing the polymer and the organic solvent to produce the composition (X) in the water removal step, it is possible to further reduce the water content of the produced binder composition and to thereby further improve output characteristics of an all-solid-state secondary battery that includes a solid electrolyte-containing layer formed using the binder composition.

Moreover, the present disclosure aims to advantageously solve the problem set forth above, and a presently disclosed method of producing a slurry composition for an all-solid-state secondary battery comprises a step of producing a slurry composition for an all-solid-state secondary battery containing: a solid electrolyte; and a binder composition for an all-solid-state secondary battery produced by any one of the methods of producing a binder composition for an all-solid-state secondary battery set forth above. Through the presently disclosed method of producing a slurry composition for an all-solid-state secondary battery, it is possible to produce a slurry composition for an all-solid-state secondary battery with which it is possible to form a solid electrolyte-containing layer that can cause an all-solid-state secondary battery to display excellent output characteristics and cycle characteristics.

Furthermore, the present disclosure aims to advantageously solve the problem set forth above, and a presently disclosed method of producing a solid electrolyte-containing layer comprises a step of forming a solid electrolyte-containing layer using a slurry composition for an all-solid-state secondary battery produced by the method of producing a slurry composition for an all-solid-state secondary battery set forth above. Through the presently disclosed method of producing a solid electrolyte-containing layer, it is possible to produce a solid electrolyte-containing layer that can cause an all-solid-state secondary battery to display excellent output characteristics and cycle characteristics.

Also, the present disclosure aims to advantageously solve the problem set forth above, and a presently disclosed method of producing an all-solid-state secondary battery comprises a step of producing an all-solid-state secondary battery using a solid electrolyte-containing layer produced by the method of producing a solid electrolyte-containing layer set forth above. Through the presently disclosed method of producing an all-solid-state secondary battery, it is possible to produce an all-solid-state secondary battery that can display excellent output characteristics and cycle characteristics.

### (Advantageous Effect)

According to the present disclosure, it is possible to provide a method of producing a binder composition for an all-solid-state secondary battery with which it is possible to form a solid electrolyte-containing layer that can cause an all-solid-state secondary battery to display excellent output characteristics and cycle characteristics.

Moreover, according to the present disclosure, it is possible to provide a method of producing a slurry composition for an all-solid-state secondary battery with which it is possible to form a solid electrolyte-containing layer that can cause an all-solid-state secondary battery to display excellent output characteristics and cycle characteristics.

Furthermore, according to the present disclosure, it is possible to provide a method of producing a solid electrolyte-containing layer that can cause an all-solid-state secondary battery to display excellent output characteristics and cycle characteristics.

Also, according to the present disclosure, it is possible to provide a method of producing an all-solid-state secondary battery that can display excellent output characteristics and cycle characteristics.

### DETAILED DESCRIPTION

The following provides a detailed description of embodiments of the present disclosure.

A binder composition for an all-solid-state secondary battery (hereinafter, also referred to simply as a "binder composition") that is produced by the presently disclosed method of producing a binder composition for an all-solid-state secondary battery can be used in production of a slurry composition for an all-solid-state secondary battery (hereinafter, also referred to simply as a "slurry composition").

Moreover, a binder composition that is produced by the presently disclosed method of producing a binder composition can be used in the presently disclosed method of producing a slurry composition.

A slurry composition that is produced by the presently disclosed method of producing a slurry composition can be used in formation of a solid electrolyte-containing layer, such as an electrode mixed material layer or a solid electrolyte layer, that is used in an all-solid-state secondary battery, such as an all-solid-state lithium ion secondary battery.

Moreover, a slurry composition that is produced by the presently disclosed method of producing a slurry composition can be used in the presently disclosed method of producing a solid electrolyte-containing layer.

A solid electrolyte-containing layer that is produced by the presently disclosed method of producing a solid electrolyte-containing layer can be used in production of an all-solid-state secondary battery.

Moreover, a solid electrolyte-containing layer that is produced by the presently disclosed method of producing a solid electrolyte-containing layer can be used in the presently disclosed method of producing an all-solid-state secondary battery.

### (Method of producing binder composition for all-solid-state secondary battery)

The presently disclosed method of producing a binder composition is a method of producing a binder composition that contains a polymer and an organic solvent. A feature of the presently disclosed method of producing a binder composition is that it includes a water removal step of using a specific desiccant to obtain a composition (X) that contains a polymer and an organic solvent and has a water content of 200 ppm or less and a transition metal removal step of magnetically removing transition metal contained in the composition (X) to obtain a binder composition. Through the presently disclosed method of producing a binder composition, it is possible to produce a binder composition with which it is possible to form a solid electrolyte-containing layer that can cause an all-solid-state secondary battery to display excellent output characteristics and cycle characteristics.

### <Water removal step>

In the water removal step, a specific desiccant is used to obtain a composition (X) that contains a polymer and an organic solvent and has a water content of 200 ppm or less. Components such as a polymer and an organic solvent that are used in production of a binder composition may have a trace amount of water mixed therein. By performing a water removal step of using a specific desiccant to produce a composition (X) having a water content that is not more than a specific value in the presently disclosed method of producing a binder composition, it is possible to reduce the water content of the produced binder composition. This makes it possible to cause the display of excellent output characteristics by an all-solid-state secondary battery that includes a solid electrolyte-containing layer formed using the binder composition.

Note that a specific method for obtaining a composition (X) that contains a polymer and an organic solvent and has a water content that is not more than the specific value set forth above using a specific desiccant in the water removal step is described further below.

### <<Desiccant>>

The desiccant that is used in the water removal step includes either or both of a group 13 element and a group 14 element. By using a desiccant that includes either or both of a group 13 element and a group 14 element, it is possible to sufficiently reduce the water content of the obtained composition (X) and binder composition.

The group 13 element may be boron (B), aluminum (Al), gallium (Ga), indium (In), thallium (Tl), or nihonium (Nh). Of these group 13 elements, aluminum is preferable from a viewpoint of further reducing the water content of the obtained composition (X) and binder composition.

Moreover, the group 14 element may be carbon (C), silicon (Si), germanium (Ge), tin (Sn), lead (Pb), or flerovium (Fl). Of these group 14 elements, silicon (Si) is preferable from a viewpoint of further reducing the water content of the obtained composition (X) and binder composition.

Note that the desiccant may be an organic compound or an inorganic compound.

The desiccant that is used in the water removal step preferably includes either or both of an -O-Si-O- structure and an -O-Al-O- structure from a viewpoint of further reducing the water content of the obtained composition (X) and binder composition.

Examples of desiccants including either or both of an -O-Si-O-structure and an -O-Al-O- structure include desiccants including an -O-Si-O- structure such as silica gel; desiccants including an -O-Al-O-structure such as aluminum oxide; and desiccants including both an -O-Si-O-structure and an -O-Al-O- structure such as zeolites, which are crystalline aluminosilicates. In particular, it is preferable to use silica gel or a zeolite as the desiccant from a viewpoint of further reducing the water content of the obtained composition (X) and binder composition.

Note that the zeolite may be a natural zeolite or a synthetic zeolite. Examples of synthetic zeolites that can be used include various types of molecular sieves (types 3A, 4A, 13X, etc.) and ZEOflair 110 produced by Zeochem.

Moreover, just one of the desiccants described above may be used individually, or two or more of the desiccants described above may be used as a mixture in a freely selected ratio.

The form of the desiccant that is used in the water removal step can be selected as appropriate to the extent that the desired effects are obtained. For example, the form of the desiccant may be powdered, bead-like, etc.

### <<Composition (X)>>

The composition (X) that is obtained in the water removal step contains a polymer and an organic solvent and has a water content of 200 ppm or less.

### {Polymer}

The polymer may be any polymer without any specific limitations so long as it is a component that can bind components such as a solid electrolyte to one another (i.e., is a component that can function as a binder) in a solid electrolyte-containing layer that is formed from a slurry composition produced using the binder composition.

Note that in the binder composition and a subsequently described slurry composition, the polymer may be in a dissolved state in the organic solvent or may form particles that are in a dispersed state in the organic solvent.

### «Chemical composition»

The polymer preferably includes one or more selected from the group consisting of a vinyl cyanide monomer unit, a (meth)acrylic acid ester monomer unit, an aromatic vinyl monomer unit, an aliphatic conjugated diene monomer unit, and an alkylene structural unit, for example. When the polymer includes a specific monomer unit and/or structural unit described above, battery characteristics (for example, output characteristics and cycle characteristics) of an all-solid-state secondary battery that includes a solid electrolyte-containing layer formed using the binder composition can be improved.

Note that the phrase "includes a monomer unit" as used in the present specification means that "a polymer obtained using that monomer includes a structural unit derived from the monomer".

The polymer may include structural units other than a vinyl cyanide monomer unit, a (meth)acrylic acid ester monomer unit, an aromatic vinyl monomer unit, an aliphatic conjugated diene monomer unit, and an alkylene structural unit (i.e., may include other structural units).

### [Vinyl cyanide monomer unit]

Examples of vinyl cyanide monomers that can form a vinyl cyanide monomer unit include acrylonitrile, methacrylonitrile, α-chloroacrylonitrile, and α-ethylacrylonitrile. One of these vinyl cyanide monomers may be used individually, or two or more of these vinyl cyanide monomers may be used in combination. Of these vinyl cyanide monomers, acrylonitrile is preferable.

In a case in which the polymer includes a vinyl cyanide monomer unit, the proportion constituted by vinyl cyanide monomer units among all structural units included in the polymer when all structural units are taken to be 100 mass% is preferably 2 mass% or more, more preferably 3 mass% or more, even more preferably 4 mass% or more, and further preferably 10 mass% or more, and is preferably 35 mass% or less, more preferably 28 mass% or less, even more preferably 26 mass% or less, and further preferably 15 mass% or less. When the proportion constituted by vinyl cyanide monomer units among all structural units is within any of the specific ranges set forth above, battery characteristics (for example, output characteristics and cycle characteristics) of an all-solid-state secondary battery that includes a solid electrolyte-containing layer formed using the binder composition can be further improved.

Note that the proportion (mass%) constituted by a certain structural unit (inclusive of "monomer units") among all structural units included in a polymer that is referred to in the present specification can be measured by a nuclear magnetic resonance (NMR) method such as ¹H-NMR.

### [(Meth)acrylic acid ester monomer unit]

Examples of (meth)acrylic acid ester monomers that can form an acrylic acid ester monomer unit include both acrylic acid ester monomers that do not include an aromatic hydrocarbon ring and acrylic acid ester monomers that include an aromatic hydrocarbon ring.

Examples of (meth)acrylic acid ester monomers that do not include an aromatic hydrocarbon ring include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, nonyl acrylate, decyl acrylate, lauryl acrylate, n-tetradecyl acrylate, stearyl acrylate, and 2-ethylhexyl acrylate; acrylic acid alkoxy esters such as 2-methoxyethyl acrylate and 2-ethoxyethyl acrylate; 2-(perfluoroalkyl)ethyl acrylates such as 2-(perfluorobutyl)ethyl acrylate and 2-(perfluoropentyl)ethyl acrylate; methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, nonyl methacrylate, decyl methacrylate, lauryl methacrylate, tridecyl methacrylate, n-tetradecyl methacrylate, stearyl methacrylate, and 2-ethylhexyl methacrylate; methacrylic acid alkoxy esters such as 2-methoxyethyl methacrylate and 2-ethoxyethyl methacrylate; and 2-(perfluoroalkyl)ethyl methacrylates such as 2-(perfluorobutyl)ethyl methacrylate and 2-(perfluoropentyl)ethyl methacrylate. Moreover, (meth)acrylic acid ester monomers are also inclusive of diesters of α,β-ethylenically unsaturated dicarboxylic acids, examples of which include lower alkyl diesters of itaconic acid such as diethyl itaconate and dibutyl itaconate.

The aromatic hydrocarbon ring included in a (meth)acrylic acid ester monomer unit that includes an aromatic hydrocarbon ring may be a benzene ring, a naphthalene ring, or an anthracene ring, for example, without any specific limitations. Of these aromatic hydrocarbon rings, a benzene ring is preferable. Note that such a monomer unit may include one type of aromatic hydrocarbon ring or may include two or more types of aromatic hydrocarbon rings.

Examples of acrylic acid ester monomers that include an aromatic hydrocarbon ring include phenoxyethyl (meth)acrylate, phenyl (meth)acrylate, ethoxylated o-phenylphenol (meth)acrylate, and phenoxypolyethylene glycol (meth)acrylate.

Note that in the present disclosure, "(meth)acrylate" is used to indicate "acrylate" and/or "methacrylate".

One of the acrylic acid ester monomers described above may be used individually, or two or more of the acrylic acid ester monomers described above may be used in combination. Of these monomers, methyl acrylate, ethyl acrylate, methyl methacrylate, butyl acrylate (n-butyl acrylate, t-butyl acrylate, etc.), and dibutyl itaconate are preferable.

In a case in which the polymer includes a (meth)acrylic acid ester monomer unit, the proportion constituted by (meth)acrylic acid ester monomer units among all structural units included in the polymer when all structural units are taken to be 100 mass% is preferably 25 mass% or more, more preferably 30 mass% or more, even more preferably 35 mass% or more, and further preferably 65 mass% or more, and is preferably 95 mass% or less, more preferably 92 mass% or less, even more preferably 90 mass% or less, and further preferably 80 mass% or less. When the proportion constituted by (meth)acrylic acid ester monomer units among all structural units is within any of the specific ranges set forth above, battery characteristics (for example, output characteristics and cycle characteristics) of an all-solid-state secondary battery that includes a solid electrolyte-containing layer formed using the binder composition can be further improved.

### [Aromatic vinyl monomer unit]

Examples of aromatic monomers that can form an aromatic vinyl monomer unit include styrene, styrene sulfonic acid and salts thereof, α-methylstyrene, p-t-butylstyrene, butoxystyrene, vinyltoluene, chlorostyrene, and vinylnaphthalene.

One of the aromatic vinyl monomers described above may be used individually, or two or more of the aromatic vinyl monomers described above may be used in combination. Of these aromatic vinyl monomers, styrene is preferable from a viewpoint of improving battery characteristics of an all-solid-state secondary battery.

In a case in which the polymer includes an aromatic vinyl monomer unit, the proportion constituted by aromatic vinyl monomer units among all structural units included in the polymer when all structural units are taken to be 100 mass% is preferably 3 mass% or more, more preferably 5 mass% or more, even more preferably 7 mass% or more, and particularly preferably 10 mass% or more, and is preferably 40 mass% or less, more preferably 35 mass% or less, even more preferably 30 mass% or less, and further preferably 23 mass% or less. When the proportion constituted by aromatic vinyl monomer units among all structural units is within any of the specific ranges set forth above, battery characteristics (for example, output characteristics and cycle characteristics) of an all-solid-state secondary battery that includes a solid electrolyte-containing layer formed using the binder composition can be further improved.

### [Aliphatic conjugated diene monomer unit]

Examples of aliphatic conjugated diene monomers that can form an aliphatic conjugated diene monomer unit include aliphatic conjugated diene monomers such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination.

Of the aliphatic conjugated diene monomers described above, 1,3-butadiene and isoprene are preferable, and 1,3-butadiene is more preferable.

### [Alkylene structural unit]

An alkylene structural unit is a repeating unit that is composed of only an alkylene structure represented by a general formula -CₙH₂ₙ- (n is an integer of 2 or more).

The alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).

No specific limitations are placed on the method by which the alkylene structural unit is introduced into the polymer. For example, method (1) or (2) described below may be used.
(1) A method in which the polymer is obtained by hydrogenating a polymer including an aliphatic conjugated diene monomer unit so as to convert the aliphatic conjugated diene monomer unit to an alkylene structural unit
(2) A method in which the polymer is produced from a monomer composition containing a 1-olefin monomer (for example, ethylene, propylene, 1-butene, or 1-hexene)

Of these methods, method (1) is preferable in terms of ease of polymer production.

In other words, the alkylene structural unit is preferably a structural unit obtained through hydrogenation of an aliphatic conjugated diene monomer unit (i.e., is preferably a hydrogenated aliphatic conjugated diene unit).

The aliphatic conjugated diene monomer that is used in method (1) may be any of the previously described aliphatic conjugated diene monomers that can form an aliphatic conjugated diene monomer unit. In other words, specific examples of alkylene structural units include a structural unit obtained through hydrogenation of a 1,3-butadiene unit (i.e., a hydrogenated 1,3-butadiene unit), a structural unit obtained through hydrogenation of an isoprene unit (i.e., a hydrogenated isoprene unit), a structural unit obtained through hydrogenation of a 2,3-dimethyl-1,3-butadiene unit (i.e., a hydrogenated 2,3-dimethyl-1,3-butadiene unit), and a structural unit obtained through hydrogenation of 1,3-pentadiene (i.e., a hydrogenated 1,3-pentadiene unit). Of these alkylene structural units, a hydrogenated 1,3-butadiene unit and a hydrogenated isoprene unit are preferable, and a hydrogenated 1,3-butadiene unit is more preferable.

Note that one of these aliphatic conjugated diene monomers or 1-olefin monomers may be used individually, or two or more of these aliphatic conjugated diene monomers or 1-olefin monomers may be used in combination.

In a case in which the polymer includes an aliphatic conjugated diene monomer unit and/or an alkylene structural unit, the total proportion constituted by aliphatic conjugated diene monomer units and alkylene structural units among all structural units included in the polymer when all structural units are taken to be 100 mass% is preferably 5 mass% or more, more preferably 6 mass% or more, and even more preferably 7 mass% or more, and is preferably 50 mass% or less, more preferably 47 mass% or less, and even more preferably 45 mass% or less. When the total proportion constituted by aliphatic conjugated diene monomer units and alkylene structural units among all structural units is within any of the specific ranges set forth above, battery characteristics (for example, output characteristics and cycle characteristics) of an all-solid-state secondary battery that includes a solid electrolyte-containing layer formed using the binder composition can be further improved.

### [Other structural units]

Examples of other structural units include, but are not specifically limited to, a cross-linkable monomer unit and the like. Note that the polymer may include just one type of other structural unit or may include two or more types of other structural units.

### -Cross-linkable monomer unit-

Cross-linkable monomers that can form a cross-linkable monomer unit are monomers that have at least two polymerizable structures (olefinic double bonds, epoxy groups, etc.) per one molecule. Examples of cross-linkable monomers include allyl (meth)acrylate, allyl glycidyl ether, and ethylene glycol di(meth)acrylate. One of these cross-linkable monomers may be used individually, or two or more of these cross-linkable monomers may be used in combination.

In a case in which the polymer includes a cross-linkable monomer unit, the proportion constituted by cross-linkable monomer units among all structural units included in the polymer when all structural units are taken to be 100 mass% can be set as 0.1 mass% or more or as 0.5 mass% or more, and is preferably 5 mass% or less, more preferably 4 mass% or less, and even more preferably 3 mass% or less.

### <<Production method>>

No specific limitations are placed on the method by which the polymer is produced. For example, the polymer can be produced by polymerizing a monomer composition containing monomers that can form the various monomer units described above and then optionally performing hydrogenation.

In the present disclosure, the proportional content of each monomer in the monomer composition can be set in accordance with the proportional content of each monomer unit in the polymer.

Although the polymerization method is not specifically limited, a method such as solution polymerization, suspension polymerization, bulk polymerization, or emulsion polymerization may be used. A known emulsifier or polymerization initiator may be used in these polymerization methods as necessary.

The method of hydrogenation is not specifically limited and may be a typical method using a catalyst (for example, refer to WO2012/165120A1, WO2013/080989A1, and JP2013-8485A).

### {Organic solvent}

The organic solvent that is used in the composition (X) can be any known organic solvent that can be used in a binder composition for an all-solid-state secondary battery without any specific limitations.

The SP value of the organic solvent is preferably 5 or more, more preferably 6 or more, and even more preferably 7 or more, and is preferably 9.5 or less, more preferably 9 or less, and even more preferably 8.5 or less. By using an organic solvent having an SP value that is within any of the specific ranges set forth above, it is possible to further reduce the water content of the composition (X) and binder composition because it is easier to remove water through the desiccant. This makes it possible to further enhance output characteristics of an all-solid-state secondary battery that includes a solid electrolyte-containing layer formed using the binder composition. Moreover, when the SP value of the organic solvent is not less than any of the lower limits set forth above, it is possible to cause good dispersion of a solid electrolyte in a slurry composition that is produced using the binder composition. On the other hand, when the SP value of the organic solvent is not more than any of the upper limits set forth above, it is possible to prevent degradation of a solid electrolyte caused by the organic solvent and to inhibit deterioration of output characteristics of an all-solid-state secondary battery.

Examples of organic solvents having an SP value that is within any of the specific ranges set forth above include butyl butyrate (SP value: 8.1), xylene (SP value: 8.3), mesitylene (SP value: 8.5), diisobutyl ketone (SP value: 7.8), decane (SP value: 6.6), decalin (SP value: 8.8), methyl isobutyl ketone (SP value: 8.4), and cyclopentyl methyl ether (SP value: 8.4). Of these organic solvents, butyl butyrate, xylene, and diisobutyl ketone are preferable from a viewpoint of dispersibility of a solid electrolyte in a slurry composition that is produced using the binder composition and also from a viewpoint of slurry drying properties. Note that just one of these organic solvents may be used individually, or two or more of these organic solvents may be used as a mixture in a freely selected ratio.

### {Water content}

The composition (X) obtained in the water removal step has a water content that is restricted to a low level as a result of the composition (X) being produced using the desiccant.

Specifically, the water content of the composition (X), by mass, is required to be 200 ppm or less, and is preferably 150 ppm or less, more preferably 100 ppm or less, and even more preferably 70 ppm or less. Through the water content of the composition (X) being 200 ppm or less, the water content of the binder composition that is produced can be sufficiently reduced. This makes it possible to cause the display of excellent output characteristics by an all-solid-state secondary battery that includes a solid electrolyte-containing layer formed using the binder composition.

Moreover, the water content of the composition (X), by mass, may be 5 ppm or more, may be 7.5 ppm or more, or may be 10 ppm or more, for example, but is not specifically limited thereto.

Note that water (moisture) contained in the composition (X) may originate from water that is mixed into components used in production of the composition (X), such as the above-described polymer and organic solvent, for example, but is not specifically limited to originating therefrom.

The water content of the composition (X) can be adjusted through the production method of the polymer, the type of organic solvent, and the type and used amount of the desiccant in the water removal step, for example.

### {Transition metal content}

The composition (X) obtained by the water removal step contains transition metal.

The transition metal that is contained in the composition (X) originates mainly from impurities in the desiccant that is used in the water removal step. Besides transition metal originating from impurities in the desiccant, the composition (X) may also contain transition metal originating from a metal material such as stainless steel that is used in piping or the like, for example.

The transition metal may be a first row transition metal such as iron (Fe), cobalt (Co), nickel (Ni), copper (Cu), manganese (Mn), chromium (Cr), vanadium (V), titanium (Ti), or scandium (Sc), for example.

Note that the "transition metal content" of a certain composition referred to in the present specification is the content in the composition of one or more transition metals among the transition metals described above. For example, the transition metal content of a certain composition can be measured as the iron (Fe) content in that composition.

The transition metal content, by mass, of the composition (X) is preferably 50 ppm or less, and more preferably 25 ppm or less, but is not specifically limited thereto. When the transition metal content of the composition (X) is not more than any of the upper limits set forth above, the transition metal content of the produced binder composition can easily be restricted to a low level because only a small amount of transition metal needs to be removed from the composition (X) in the subsequently described transition metal removal step.

Although no specific limitations are placed on a lower limit for the transition metal content of the composition (X), the transition metal content, by mass, is normally more than 5 ppm.

### {Solid content concentration}

The solid content concentration of the composition (X) is preferably 5 mass% or more, more preferably 6 mass% or more, and even more preferably 7 mass% or more, and is preferably 50 mass% or less, more preferably 45 mass% or less, and even more preferably 40 mass% or less. When the solid content concentration of the composition (X) is not less than any of the lower limits set forth above, it is possible for a polymer that can serve as a binder to be sufficiently contained in the produced binder composition. On the other hand, when the solid content concentration of the composition (X) is not more than any of the upper limits set forth above, the viscosity of the composition (X) can be inhibited from excessively increasing, and the composition (X) can easily be filtered using a magnetic filter in the subsequently described transition metal removal step.

Note that the "solid content concentration" can be measured by a method described in the EXAMPLES section of the present specification.

### «Specific method of water removal step»

The specific method by which a composition (X) that contains a polymer and an organic solvent and has a water content of not more than a specific value is obtained using a desiccant in the water removal step may be either of: (1) a method in which a pre-dehydration composition containing a polymer and an organic solvent is treated using a desiccant to obtain a composition (X); and (2) a method in which an organic solvent is treated using a desiccant to obtain a dehydrated organic solvent and then a polymer is dissolved or dispersed in the dehydrated organic solvent to obtain a composition (X).

In other words, the water removal step may include:
(1) a step A-1 of removing water from a pre-dehydration composition (Y) that contains a polymer and an organic solvent using a desiccant to obtain a composition (X); or
(2) a step B-1 of removing water from an organic solvent using a desiccant to obtain a dehydrated organic solvent and a step B-2 of dissolving or dispersing a polymer in the dehydrated organic solvent to obtain a composition (X).

From a viewpoint of further reducing the water content of the obtained composition (X) and binder composition, the water removal step preferably includes (1) a step A-1 of removing water from a pre-dehydration composition (Y) that contains a polymer and an organic solvent using a desiccant to obtain a composition (X).

In the case of (1) described above, the water removal step may include, as a step of obtaining a pre-dehydration composition (Y), before step A-1:
(i) a step A-0 of performing solvent exchange with respect to a composition (Z) that contains a polymer and a solvent S to obtain a pre-dehydration composition (Y) that contains the polymer and an organic solvent; or
(ii) a step A-0' of dissolving or dispersing a polymer in an organic solvent to obtain a pre-dehydration composition (Y) that contains the polymer and the organic solvent.

Note that the "solvent S" in step A-0 of (i) described above is a different solvent to the organic solvent that is contained in the binder composition, the composition (X), and the pre-dehydration composition (Y). It is preferable that the water removal step includes step A-0 before step A-1 from a viewpoint of production efficiency because this makes it possible for a solution or dispersion liquid of a polymer obtained by the previously described polymer production method to be used in that form as the composition (Z).

The following describes a case in which the water removal step includes:
a step A-0 of performing solvent exchange with respect to a composition (Z) that contains a polymer and a solvent S to obtain a pre-dehydration composition (Y) that contains the polymer and an organic solvent; and
a step A-1 of removing water from the pre-dehydration composition (Y) that contains the polymer and the organic solvent using a desiccant to obtain a composition (X).

However, the presently disclosed method of producing a binder composition is not limited to the following case.

### {Step A-0}

In step A-0, solvent exchange is performed with respect to a composition (Z) that contains a polymer and a solvent to obtain a pre-dehydration composition (Y) that contains the polymer and an organic solvent.

### -Composition (Z)-

The composition (Z) that is used in step A-0 contains the previously described polymer and a solvent S.

The solvent S is not specifically limited so long as it is a different solvent to the organic solvent that is contained in the binder composition, the composition (X), and the pre-dehydration composition (Y). Note that the SP value of the solvent S is normally outside of a preferred range for the SP value of the organic solvent described above. In other words, the SP value of the solvent S is normally less than 5 or more than 9.5.

Note that a solution or dispersion liquid of a polymer that is obtained through polymer production described above can be used in that form as the composition (Z). For example, an aqueous solution or water dispersion of a polymer that is obtained by polymer production described above (i.e., a composition (Z) containing a polymer and water (SP value: 23.4) as the solvent S) can be used as the composition (Z).

### -Solvent exchange-

The method by which the solvent S contained in the composition (Z) is exchanged with an organic solvent in solvent exchange (solvent substitution) is not specifically limited and may be a known method.

For example, an organic solvent may be added to the composition (Z) containing the polymer and the solvent S to obtain a mixture, and then distillation under reduced pressure may be performed so as to remove the solvent S and excess organic solvent from the mixture, and thereby obtain a pre-dehydration composition (Y) containing the polymer and the organic solvent. Note that the temperature during distillation under reduced pressure can be set as appropriate depending on the types of the solvent S and organic solvent.

### -Pre-dehydration composition (Y)-

The pre-dehydration composition (Y) that is obtained by step A-0 contains a polymer and an organic solvent.

The water content of the pre-dehydration composition (Y), by mass, is normally more than 200 ppm, but is not specifically limited thereto. Moreover, the water content of the pre-dehydration composition (Y), by mass, is preferably 1,000 ppm or less, more preferably 800 ppm or less, and even more preferably 600 ppm or less, but is not specifically limited thereto. When the water content of the pre-dehydration composition (Y) is not more than any of the upper limits set forth above, the water content of the obtained composition (X) and binder composition can easily be restricted to a low level because only a small amount of water needs to be removed from the pre-dehydration composition (Y) using the desiccant.

The solid content concentration of the pre-dehydration composition (Y) is preferably 5 mass% or more, more preferably 6 mass% or more, and even more preferably 7 mass% or more, and is preferably 50 mass% or less, more preferably 45 mass% or less, and even more preferably 40 mass% or less. When the solid content concentration of the pre-dehydration composition (Y) is not less than any of the lower limits set forth above, it is possible for a polymer that can serve as a binder to be sufficiently contained in the produced binder composition. On the other hand, when the solid content concentration of the pre-dehydration composition (Y) is not more than any of the upper limits set forth above, the viscosity of the pre-dehydration composition (Y) and the previously described composition (X) can be inhibited from excessively increasing, and the composition (X) can easily be filtered using a magnetic filter in the subsequently described transition metal removal step.

### {Step A-1}

In step A-1, water is removed from the pre-dehydration composition (Y) that contains the polymer and the organic solvent using the specific desiccant described above to obtain a composition (X).

The amount of the desiccant that is used relative to 100 parts by mass of the pre-dehydration composition (Y) is preferably 5 parts by mass or more, more preferably 7.5 parts by mass or more, even more preferably 10 parts by mass or more, and further preferably 20 parts by mass or more, and is preferably 50 parts by mass or less, more preferably 45 parts by mass or less, and even more preferably 40 parts by mass or less. When the used amount of the desiccant is not less than any of the lower limits set forth above, water can be removed well from the pre-dehydration composition (Y), and the water content of the obtained composition (X) and binder composition can be further reduced. On the other hand, when the used amount of the desiccant is not more than any of the upper limits set forth above, the amount of transition metal originating from impurities in the desiccant that becomes mixed in can be reduced, and thus the transition metal content of the obtained composition (X) can be reduced. This makes it possible to easily restrict the transition metal content of the binder composition to a low level because the amount of transition metal that needs to be removed from the composition (X) in the transition metal removal step can be reduced.

No specific limitations are placed on the method by which water is removed from the pre-dehydration composition (Y) using the desiccant to obtain the composition (X) in step A-1. Although it is possible to adopt a method in which the desiccant is added to the pre-dehydration composition (Y), is left at rest, and then a liquid phase portion is collected as the composition (X), it is preferable to adopt a method in which the desiccant is added to the pre-dehydration composition (Y), is stirred therewith, and then a liquid phase portion is collected as the composition (X) from a viewpoint of further reducing the water content of the obtained composition (X) and binder composition.

The stirring time is preferably 1 hour or more, more preferably 3 hours or more, and even more preferably 5 hours or more, and is preferably 24 hours or less, and more preferably 7 hours or less. When the stirring time is not less than any of the lower limits set forth above, water can be removed well from the pre-dehydration composition (Y), and the water content of the obtained composition (X) and binder composition can be further reduced. On the other hand, when the stirring time is not more than any of the upper limits set forth above, binder composition production efficiency can be improved.

The temperature during stirring can be adjusted as appropriate depending on the types of organic solvent and desiccant.

### <Transition metal removal step>

In the transition metal removal step, transition metal contained in the composition (X) is magnetically removed to obtain a binder composition. By magnetically removing transition metal contained in the composition (X), it is possible to reduce the transition metal content of the produced binder composition. This makes it possible to cause the display of excellent cycle characteristics by an all-solid-state secondary battery that includes a solid electrolyte-containing layer formed using the binder composition.

The method by which transition metal contained in the composition (X) is magnetically removed is not specifically limited and may, for example, be by filtering the composition (X) using a magnetic filter so as to obtain a filtrate as the binder composition.

The magnetic flux density of the magnetic filter can be adjusted as appropriate depending on the transition metal content of the composition (X), but is preferably 1,000 gauss or more, more preferably 2,000 gauss or more, and even more preferably 5,000 gauss or more because efficiency of transition metal removal decreases with a low magnetic flux density. When the magnetic flux density of the magnetic filter is not less than any of the lower limits set forth above, transition metal contained in the composition (X) can be removed well, and the transition metal content of the produced binder composition can be further reduced.

Moreover, the magnetic flux density of the magnetic filter is preferably 10,000 gauss or less, but is not specifically limited thereto.

The size of openings in the magnetic filter can be adjusted as appropriate to the extent that the desired effects are obtained.

Note that filtration using a prefilter may be performed prior to filtration using a magnetic filter described above in order to remove the desiccant, for example, that is contained in the composition (X).

### <Binder composition>

A binder composition that is produced by the presently disclosed method of producing a binder composition contains a polymer and an organic solvent. Moreover, a binder composition that is produced by the presently disclosed method of producing a binder composition has a water content and a transition metal content that are both restricted to low levels as a result of being produced through the water removal step and the transition metal removal step described above.

### <<Water content>>

Specifically, the water content of the binder composition, by mass, is preferably 200 ppm or less, more preferably 150 ppm or less, even more preferably 100 ppm or less, and further preferably 70 ppm or less. When the water content of the binder composition is not more than any of the upper limits set forth above, output characteristics of an all-solid-state secondary battery that includes a solid electrolyte-containing layer formed using the binder composition can be further improved.

Moreover, the water content of the binder composition, by mass, may be 5 ppm or more, may be 7.5 ppm or more, or may be 10 ppm or more, for example, but is not specifically limited thereto.

Note that the water content of the binder composition is normally the same as the water content of the composition (X) described above with the exception of in special circumstances such as when a step of adding other components described below is performed after the water removal step described above.

### <<Transition metal content>>

The transition metal content of the binder composition, by mass, is preferably 5 ppm or less, more preferably 2.5 ppm or less, even more preferably 1 ppm or less, and further preferably 0.1 ppm or less. When the transition metal content of the binder composition is not more than any of the upper limits set forth above, cycle characteristics of an all-solid-state secondary battery that includes a solid electrolyte-containing layer formed using the binder composition can be further improved.

Moreover, the transition metal content of the binder composition, by mass, may be 0.0001 ppm or more, for example, but is not specifically limited thereto.

### <<Solid content concentration>>

The solid content concentration of the binder composition is preferably 5 mass% or more, more preferably 6 mass% or more, and even more preferably 7 mass% or more, and is preferably 50 mass% or less, more preferably 45 mass% or less, and even more preferably 40 mass% or less. When the solid content concentration of the binder composition is not less than any of the lower limits set forth above, it is possible for a polymer that can serve as a binder to be sufficiently contained in the binder composition. On the other hand, when the solid content concentration of the binder composition is not more than any of the upper limits set forth above, the viscosity of the binder composition can be inhibited from excessively increasing in the above-described transition metal removal step, for example, and filtration using a magnetic filter can easily be performed in the above-described transition metal removal step, for example.

### <<Viscosity>>

The viscosity of the binder composition is preferably 10 mPa·s or more, more preferably 50 mPa·s or more, and even more preferably 100 mPa·s or more, and is preferably 10,000 mPa·s or less, more preferably 5,000 mPa·s or less, and even more preferably 3,000 mPa·s or less. When the viscosity of the binder composition is within any of the specific ranges set forth above, filtration using a magnetic filter can easily be performed in the above-described transition metal removal step, and workability improves in production of a slurry composition using the binder composition.

Note that the viscosity of a binder composition can be measured by a method described in the EXAMPLES section of the present specification.

### <<Other components>>

The binder composition may optionally further contain components other than the polymer and the organic solvent (i.e., may contain other components).

Examples of other components that can optionally be contained in the binder composition include, but are not specifically limited to, binders other than the previously described polymer, dispersants, leveling agents, defoamers, conductive materials, and reinforcing materials. One of these components may be used individually, or two or more of these components may be used in combination in a freely selected ratio.

Note that no specific limitations are placed on the timing at which other components are added in the presently disclosed method of producing a binder composition. However, it is preferable that other components are added at an earlier stage than step A-1 in which the previously described desiccant is used (i.e., are added to the composition (Z) or the pre-dehydration composition (Y) in step A-0), for example, from a viewpoint that a trace amount of water that may be contained in other components can be removed well through the desiccant.

### (Method of producing slurry composition for all-solid-state secondary battery)

A feature of the presently disclosed method of producing a slurry composition is that it includes a step of producing a slurry composition containing a solid electrolyte and a binder composition produced by the presently disclosed method of producing a binder composition set forth above.

A slurry composition that is produced by the presently disclosed method of producing a slurry composition contains at least a solid electrolyte and a binder composition produced by the presently disclosed method of producing a binder composition set forth above. In other words, the slurry composition contains at least a solid electrolyte, the previously described polymer, and an organic solvent. The slurry composition may optionally further contain an electrode active material, a conductive material, and other components.

Moreover, a slurry composition produced by the presently disclosed method of producing a slurry composition has a water content and a transition metal content that are both restricted to low levels as a result of containing a binder composition that has been produced by the presently disclosed method of producing a binder composition set forth above. Consequently, this slurry composition can be used to form a solid electrolyte-containing layer that can cause an all-solid-state secondary battery to display excellent output characteristics and cycle characteristics. In other words, through the presently disclosed method of producing a slurry composition, it is possible to produce a slurry composition with which it is possible to form a solid electrolyte-containing layer that can cause an all-solid-state secondary battery to display excellent output characteristics and cycle characteristics.

### <Solid electrolyte>

The solid electrolyte may be any particles formed of a solid that displays ion conductivity without any specific limitations, and is preferably an inorganic solid electrolyte.

Examples of inorganic solid electrolytes that can be used include crystalline inorganic ion conductors, amorphous inorganic ion conductors, and mixtures thereof without any specific limitations. In a case in which the all-solid-state secondary battery is an all-solid-state lithium ion secondary battery, for example, the inorganic solid electrolyte can normally be a crystalline inorganic lithium ion conductor, an amorphous inorganic lithium ion conductor, or a mixture thereof. In particular, the inorganic solid electrolyte preferably includes either or both of a sulfide inorganic solid electrolyte and an oxide inorganic solid electrolyte from a viewpoint of forming a solid electrolyte-containing layer having excellent ion conductivity.

Although the following describes, as one example, a case in which the slurry composition for an all-solid-state secondary battery is a slurry composition for an all-solid-state lithium ion secondary battery, the present disclosure is not limited to the following example.

The crystalline inorganic lithium ion conductor may be Li₃N, LISICON (Li₁₄Zn(GeO₄)₄), a perovskite-type crystalline inorganic lithium ion conductor (for example, Li_{0.5}La_{0.5}TiO₃), a garnet-type crystalline inorganic lithium ion conductor (for example, Li₇La₃Zr₂O₁₂), LIPON (Li_{3+y}PO₄₋ₓNₓ), Thio-LISICON (Li_{3.25}Ge_{0.25}P_{0.75}S₄), an argyrodite-type crystalline inorganic lithium ion conductor (for example, Li_{5.6}PS_{4.4}Cl_{1.8}), or the like.

One of the above-described crystalline inorganic lithium ion conductors may be used individually, or two or more of the above-described crystalline inorganic lithium ion conductors may be used as a mixture.

The amorphous inorganic lithium ion conductor may be a substance that includes a sulfur atom and displays ion conductivity, for example. More specific examples include glass Li-Si-S-O, Li-P-S, and an amorphous inorganic lithium ion conductor obtained using a raw material composition that contains Li₂S and a sulfide of an element belonging to any of groups 13 to 15 of the periodic table.

The element belonging to any of groups 13 to 15 may be Al, Si, Ge, P, As, Sb, or the like, for example. Moreover, the sulfide of an element belonging to any of groups 13 to 15 may, more specifically, be Al₂S₃, SiS₂, GeS₂, P₂S₃, P₂S₅, As₂S₃, Sb₂S₃, or the like, for example. Furthermore, the method by which the amorphous inorganic lithium ion conductor is synthesized using the raw material composition may be an amorphization method such as mechanical milling or melt quenching, for example. The amorphous inorganic lithium ion conductor obtained using the raw material composition that contains Li₂S and a sulfide of an element belonging to any of groups 13 to 15 of the periodic table is preferably Li₂S-P₂S₅, Li₂S-SiS₂, Li₂S-GeS₂, or Li₂S-Al₂S₃, and is more preferably Li₂S-P₂S₅.

One of the above-described amorphous inorganic lithium ion conductors may be used individually, or two or more of the above-described amorphous inorganic lithium ion conductors may be used as a mixture.

Of the examples described above, an amorphous sulfide containing Li and P or Li₇La₃Zr₂O₁₂ is preferable as an inorganic solid electrolyte for an all-solid-state lithium ion secondary battery from a viewpoint of forming a solid electrolyte-containing layer having even better ion conductivity. An amorphous sulfide containing Li and P and Li₇La₃Zr₂O₁₂ have high lithium ion conductivity, and thus the use thereof as an inorganic solid electrolyte can reduce internal resistance and improve output characteristics of a battery.

Note that from a viewpoint of reducing internal resistance and improving output characteristics of a battery, the amorphous sulfide containing Li and P is more preferably sulfide glass formed of Li₂S and P₂S₅, and particularly preferably sulfide glass produced from a mixed raw material of Li₂S and P₂S₅ in which the molar ratio of Li₂S:P₂S₅ is 65:35 to 85:15. Moreover, the amorphous sulfide containing Li and P is preferably sulfide glass-ceramic obtained by reacting a mixed raw material of Li₂S and P₂S₅ in which the molar ratio of Li₂S:P₂S₅ is 65:35 to 85:15 by a mechanochemical method. Note that from a viewpoint of maintaining lithium ion conductivity in a high state, the molar ratio of Li₂S:P₂S₅ in the mixed raw material is preferably 68:32 to 80:20.

The inorganic solid electrolyte may contain one or more sulfides selected from the group consisting of Al₂S₃, B₂S₃, and SiS₂ as a starting material other than Li₂S and P₂S₅ to the extent that ion conductivity is not reduced. The addition of such a sulfide can stabilize a glass component in the inorganic solid electrolyte.

Likewise, the inorganic solid electrolyte may contain one or more ortho-oxoacid lithium salts selected from the group consisting of Li₃PO₄, Li₄SiO₄, Li₄GeO₄, Li₃BO₃, and Li₃AlO₃, in addition to Li₂S and P₂S₅. The inclusion of such an ortho-oxoacid lithium salt can stabilize a glass component in the inorganic solid electrolyte.

One of the above-described solid electrolytes may be used individually, or two or more of the above-described solid electrolytes may be used as a mixture. Moreover, the particle diameter of the solid electrolyte described above is not specifically limited and can be the same as that of a conventionally used solid electrolyte.

### <Binder composition>

The binder composition that is used in the presently disclosed method of producing a slurry composition is a binder composition that has been produced by the presently disclosed method of producing a binder composition.

No specific limitations are placed on the mixing ratio of the solid electrolyte and the binder composition.

For example, the content of the binder composition contained in the slurry composition in terms of solid content per 100 parts by mass of the solid electrolyte is preferably 0.1 parts by mass or more, more preferably 0.2 parts by mass or more, and even more preferably 0.3 parts by mass or more, and is preferably 10 parts by mass or less, more preferably 8 parts by mass or less, and even more preferably 5 parts by mass or less. When the content of the binder composition in the slurry composition is not less than any of the lower limits set forth above, the polymer in the binder composition can be caused to display sufficient functionality as a binder. On the other hand, when the content of the binder composition in the slurry composition is not more than any of the upper limits set forth above, ion conductivity of a solid electrolyte-containing layer can be sufficiently ensured, and excess loss of cell characteristics (battery characteristics) of an all-solid-state secondary battery does not arise.

### <Electrode active material>

The electrode active material is a material that gives and receives electrons in an electrode of an all-solid-state secondary battery. In a case in which the all-solid-state secondary battery is an all-solid-state lithium ion secondary battery, for example, the electrode active material is normally a material that can occlude and release lithium.

Although the following describes, as one example, a case in which the slurry composition for an all-solid-state secondary battery is a slurry composition for an all-solid-state lithium ion secondary battery, the present disclosure is not limited to the following example.

A positive electrode active material for an all-solid-state lithium ion secondary battery may be a positive electrode active material that is formed of an inorganic compound or a positive electrode active material that is formed of an organic compound without any specific limitations. Note that the positive electrode active material may be a mixture of an inorganic compound and an organic compound.

The positive electrode active material formed of an inorganic compound may be a transition metal oxide, a complex oxide of lithium and a transition metal (lithium-containing complex metal oxide), a transition metal sulfide, or the like, for example. The aforementioned transition metal may be Fe, Co, Ni, Mn, or the like. Specific examples of inorganic compounds that may be used in the positive electrode active material include lithium-containing complex metal oxides such as LiCoO₂ (lithium cobalt oxide), LiNiO₂, LiMnO₂, LiMn₂O₄, LiFePO₄, and LiFeVO₄; transition metal sulfides such as TiS₂, TiS₃, and amorphous MoS₂; and transition metal oxides such as Cu₂V₂O₃, amorphous V₂O-P₂O₅, MoOs, V₂O₅, and V₆O₁₃. These compounds may have undergone partial element substitution.

One of the above-described positive electrode active materials formed of an inorganic compound may be used individually, or two or more of these materials may be used as a mixture.

The positive electrode active material formed of an organic compound may be a polyaniline, polypyrrole, polyacene, disulfide compound, polysulfide compound, N-fluoropyridinium salt, or the like, for example.

One of the above-described positive electrode active materials formed of an organic compound may be used individually, or two or more of these materials may be used as a mixture.

A negative electrode active material for an all-solid-state lithium ion secondary battery may be an allotrope of carbon such as graphite or coke. Note that a negative electrode active material formed of an allotrope of carbon can be used in a mixed or coated form with a metal, metal salt, oxide, or the like. Examples of negative electrode active materials that can be used also include oxides and sulfates of silicon, tin, zinc, manganese, iron, nickel, and the like; lithium metal; lithium alloys such as Li-Al, Li-Bi-Cd, and Li-Sn-Cd; lithium transition metal nitrides; and silicone.

One of the above-described negative electrode active materials may be used individually, or two or more of these materials may be used as a mixture.

Note that the particle diameter of the above-described electrode active material (positive electrode active material or negative electrode active material) is not specifically limited and can be the same as that of a conventionally used electrode active material. Also note that the amount of the above-described electrode active material in the slurry composition is not specifically limited and can be the same as that of a conventionally used electrode active material.

### <Conductive material>

The conductive material is a material for ensuring electrical contact among the electrode active material in an electrode mixed material layer formed using the slurry composition for an all-solid-state secondary battery (slurry composition for an all-solid-state secondary battery electrode). Examples of conductive materials that may be used include conductive carbon materials such as carbon black (for example, acetylene black, Ketjenblack^{®} (Ketjenblack is a registered trademark in Japan, other countries, or both), and furnace black), single-walled or multi-walled carbon nanotubes (multi-walled carbon nanotubes are inclusive of cup-stacked carbon nanotubes), carbon nanohorns, vapor-grown carbon fiber, milled carbon fiber obtained by pyrolyzing and then pulverizing polymer fiber, single layer or multilayer graphene, and carbon nonwoven fabric sheet obtained through pyrolysis of nonwoven fabric made from polymer fiber; and fibers and foils of various metals.

One of these conductive materials may be used individually, or two or more of these conductive materials may be used in combination.

The proportional content of the conductive material in the slurry composition for an all-solid-state secondary battery is preferably 0.1 parts by mass or more, and more preferably 0.5 parts by mass or more per 100 parts by mass of the electrode active material, and is preferably 10 parts by mass or less, and more preferably 7 parts by mass or less per 100 parts by mass of the electrode active material. When the amount of the conductive material is within any of the ranges set forth above, electrical contact among the electrode active material can be sufficiently ensured, and output characteristics and cycle characteristics of an all-solid-state secondary battery can be further improved.

### <Other components>

Examples of other components that can optionally be contained in the slurry composition for an all-solid-state secondary battery include dispersants, leveling agents, defoamers, reinforcing materials, and so forth. Moreover, in a case in which the all-solid-state secondary battery is an all-solid-state lithium ion secondary battery, for example, a lithium salt may be contained as another component. These other components are not specifically limited so long as they do not influence battery reactions.

Components described in JP2012-243476A, for example, can be used without any specific limitations as other components such as lithium salts, dispersants, leveling agents, defoamers, and reinforcing materials. The amounts thereof are not specifically limited and may be amounts that are described in JP2012-243476A, for example.

### <Production of slurry composition>

The slurry composition for an all-solid-state secondary battery set forth above can be obtained by dispersing or dissolving the above-described components in an organic solvent by any mixing method, for example, but is not specifically limited to being obtained in this manner. Note that any of the organic solvents previously described in the "Method of producing binder composition for all-solid-state secondary battery" section, for example, can be used as the organic solvent.

### (Method of producing solid electrolyte-containing layer)

A feature of the presently disclosed method of producing a solid electrolyte-containing layer is that it includes a step of forming a solid electrolyte-containing layer using a slurry composition produced by the presently disclosed method of producing a slurry composition set forth above.

A solid electrolyte-containing layer that is produced by the presently disclosed method of producing a solid electrolyte-containing layer is a layer that contains a solid electrolyte and may, for example, be an electrode mixed material layer (positive electrode mixed material layer or negative electrode mixed material layer) that gives and receives electrons via electrochemical reactions, a solid electrolyte layer that is disposed between a positive electrode mixed material layer and a negative electrode mixed material layer that are in opposition to each other, or the like.

Moreover, a solid electrolyte-containing layer that is produced by the presently disclosed method of producing a solid electrolyte-containing layer is a layer that is formed using a slurry composition that has been produced by the presently disclosed method of producing a slurry composition set forth above and may, for example, be formed by applying the slurry composition onto the surface of a suitable substrate to form a coating film and then drying the coating film that is formed. In other words, a solid electrolyte-containing layer that is produced by the presently disclosed method of producing a solid electrolyte-containing layer is formed of a dried product of the slurry composition set forth above, normally contains a solid electrolyte and a polymer, and optionally further contains one or more selected from the group consisting of an electrode active material, a conductive material, and other components. Note that components contained in the solid electrolyte-containing layer are components that were contained in the slurry composition set forth above, and the content ratio of these components is normally the same as the content ratio thereof in the slurry composition.

Furthermore, a solid electrolyte-containing layer that is produced by the presently disclosed method of producing a solid electrolyte-containing layer has a water content and a transition metal content that are both restricted to low levels as a result of the solid electrolyte-containing layer being formed using a slurry composition that has been produced by the presently disclosed method of producing a slurry composition. Consequently, a solid electrolyte-containing layer that is produced by the presently disclosed method of producing a solid electrolyte-containing layer can cause an all-solid-state secondary battery to display excellent output characteristics and cycle characteristics. In other words, through the presently disclosed method of producing a solid electrolyte-containing layer, it is possible to produce a solid electrolyte-containing layer that can cause an all-solid-state secondary battery to display excellent output characteristics and cycle characteristics.

### <Substrate>

No limitations are placed on the substrate onto which the slurry composition is applied. For example, a coating film of the slurry composition may be formed on the surface of a releasable substrate, this coating film may be dried to form a solid electrolyte-containing layer, and then the releasable substrate may be peeled from the solid electrolyte-containing layer. The solid electrolyte-containing layer that is peeled from the releasable substrate in this manner can be used as a free-standing film in formation of a battery member (for example, an electrode or a solid electrolyte layer) of an all-solid-state secondary battery.

Alternatively, a current collector or an electrode may be used as the substrate from a viewpoint of omitting a step of peeling the solid electrolyte-containing layer and thereby increasing production efficiency of a battery member. For example, when an electrode mixed material layer is to be produced, it is preferable that the slurry composition is applied onto a current collector that serves as a substrate.

### <<Releasable substrate>>

The releasable substrate is not specifically limited and may be a known releasable substrate such as an imide film.

### <<Current collector>>

The current collector is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

### <<Electrode>>

The electrode (positive electrode or negative electrode) is not specifically limited and may be an electrode that is obtained by forming an electrode mixed material layer containing an electrode active material, a solid electrolyte, and a binder on a current collector such as described above.

The electrode active material, solid electrolyte, and binder that are contained in the electrode mixed material layer of the electrode are not specifically limited, and known examples thereof can be used. Note that the electrode mixed material layer of the electrode may be a layer that corresponds to a solid electrolyte-containing layer produced by the presently disclosed method of producing a solid electrolyte-containing layer.

### <Formation method of solid electrolyte-containing layer>

Specific examples of methods by which the solid electrolyte-containing layer may be formed using the slurry composition include:
(1) a method in which the slurry composition is applied onto the surface of a current collector or electrode (surface at the electrode mixed material layer-side in the case of an electrode; same applies below) and is then dried;
(2) a method in which a current collector or an electrode is immersed in the slurry composition and is then dried; and
(3) a method in which the slurry composition is applied onto a releasable substrate and is dried to produce a solid electrolyte-containing layer that is then transferred onto the surface of an electrode.

Of these methods, methods (1) and (3) in which application and drying are performed are particularly preferable due to the ease of controlling the thickness of the solid electrolyte-containing layer.

### <<Application>>

Examples of methods by which the slurry composition may be applied onto the substrate include, but are not specifically limited to, doctor blading, reverse roll coating, direct roll coating, gravure coating, extrusion coating, and brush coating.

### <<Drying>>

The slurry composition on the substrate may be dried by any commonly known method without any specific limitations. Examples of drying methods that may be used include drying by warm, hot, or low-humidity air, drying in a vacuum, and drying by irradiation with infrared light, electron beams, or the like.

In a case in which the solid electrolyte-containing layer is an electrode mixed material layer, the solid electrolyte-containing layer may be subjected to a pressing process by roll pressing or the like after drying. This pressing process enables further densification of the obtained electrode mixed material layer.

### <<Transfer>>

The method by which the solid electrolyte-containing layer is transferred onto the surface of an electrode or the like in method (3) may be any commonly known transfer method without any specific limitations.

### (Electrode)

An electrode that is obtained by forming an electrode mixed material layer on a current collector using the presently disclosed method of producing a solid electrolyte-containing layer includes an electrode mixed material layer that contains a solid electrolyte and a polymer and that can optionally further contain one or more selected from the group consisting of an electrode active material and other components, and this electrode mixed material layer has a water content and transition metal content that are restricted to low levels, which makes it possible to cause an all-solid-state secondary battery to display excellent output characteristics and cycle characteristics.

### (Solid electrolyte layer)

A solid electrolyte layer that is formed using the presently disclosed method of producing a solid electrolyte-containing layer contains a solid electrolyte and a polymer and optionally further contains other components, and this solid electrolyte layer has a water content and a transition metal content that are restricted to low levels, which makes it possible to cause an all-solid-state secondary battery to display excellent output characteristics and cycle characteristics.

### (Method of producing all-solid-state secondary battery)

A feature of the presently disclosed method of producing an all-solid-state secondary battery is that it includes a step of producing an all-solid-state secondary battery using a solid electrolyte-containing layer produced by the presently disclosed method of producing a solid electrolyte-containing layer set forth above.

An all-solid-state secondary battery that is produced by the presently disclosed method of producing an all-solid-state secondary battery includes a solid electrolyte-containing layer that has been produced by the presently disclosed method of producing a solid electrolyte-containing layer set forth above. An all-solid-state secondary battery produced by the presently disclosed method of producing an all-solid-state secondary battery may, for example, include a positive electrode, a negative electrode, and a solid electrolyte layer, wherein at least one among: a positive electrode mixed material layer of the positive electrode; a negative electrode mixed material layer of the negative electrode; and the solid electrolyte layer is a solid electrolyte-containing layer that has been produced by the presently disclosed method of producing a solid electrolyte-containing layer. In other words, the presently disclosed method of producing an all-solid-state secondary battery includes a step of producing an all-solid-state secondary battery using a positive electrode that includes a positive electrode mixed material layer, a negative electrode that includes a negative electrode mixed material layer, and a solid electrolyte layer, wherein at least one among the positive electrode mixed material layer, the negative electrode mixed material layer, and the solid electrolyte layer is a solid electrolyte-containing layer that has been produced by the presently disclosed method of producing a solid electrolyte-containing layer set forth above.

Through the presently disclosed method of producing an all-solid-state secondary battery, it is possible to produce an all-solid-state secondary battery that includes a solid electrolyte-containing layer produced by the presently disclosed method of producing a solid electrolyte-containing layer set forth above and that can display excellent output characteristics and cycle characteristics.

Note that an electrode including an electrode mixed material layer that does not correspond to a solid electrolyte-containing layer produced by the presently disclosed method of producing a solid electrolyte-containing layer and/or a solid electrolyte layer that does not correspond to a solid electrolyte-containing layer produced by the presently disclosed method of producing a solid electrolyte-containing layer may be used in the presently disclosed method of producing an all-solid-state secondary battery so long as at least one among: the positive electrode mixed material layer of the positive electrode; the negative electrode mixed material layer of the negative electrode; and the solid electrolyte layer is a solid electrolyte-containing layer produced by the presently disclosed method of producing a solid electrolyte-containing layer set forth above.

Any electrode for an all-solid-state secondary battery may be used without any specific limitations as an electrode including an electrode mixed material layer that does not correspond to a solid electrolyte-containing layer produced by the presently disclosed method of producing a solid electrolyte-containing layer.

Moreover, any solid electrolyte layer, such as a solid electrolyte layer described in JP2012-243476A, JP2013-143299A, or JP2016-143614A, for example, may be used without any specific limitations as a solid electrolyte layer that does not correspond to a solid electrolyte-containing layer produced by the presently disclosed method of producing a solid electrolyte-containing layer.

The all-solid-state secondary battery can be obtained by, for example, stacking the positive electrode and the negative electrode such that the positive electrode mixed material layer of the positive electrode and the negative electrode mixed material layer of the negative electrode are in opposition via the solid electrolyte layer and optionally performing pressing thereof to obtain a laminate, subsequently placing the laminate in a battery container in that form or after rolling, folding, or the like in accordance with the battery shape, and then sealing the battery container. Note that an expanded metal, an overcurrent preventing device such as a fuse or a PTC device, a lead plate, or the like may be placed in the battery container as necessary in order to prevent pressure increase inside the battery and occurrence of overcharging or overdischarging. The shape of the battery may be a coin type, a button type, a sheet type, a cylinder type, a prismatic type, a flat type, or the like.

### EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the examples and comparative examples, the following methods were used to calculate, measure, or evaluate the chemical composition of a polymer, the solid content concentration of a composition (Z), a pre-dehydration composition (Y), and a binder composition, the water content of a composition (X) and a binder composition, the transition metal (Fe) content and viscosity of a binder composition, and the output characteristics and cycle characteristics of an all-solid-state secondary battery.

### <Chemical composition of polymer>

After coagulating 100 g of a water dispersion of a polymer in 1 L of methanol, 12 hours of vacuum drying was performed at a temperature of 60°C. The obtained dry polymer was analyzed by ¹H-NMR. The chemical composition of the polymer (proportional content (mass%) of each monomer unit and structural unit included in the polymer) was calculated based on obtained analysis values.

### <Solid content concentration>

The solid content concentration of a composition (Z), a pre-dehydration composition (Y), and a binder composition was determined based on heating residue after 3 hours at 150°C in accordance with JIS K 5601-1-2:2008.

### <Water content>

The water content of a composition (X) and a binder composition was measured by a volumetric method using a Karl Fischer Moisture Meter (produced by Mitsubishi Chemical Analytech Co., Ltd.). Note that measurement was repeated three times, and an average value of the obtained values was taken as a measurement value.

### <Transition metal (Fe) content>

A 550°C electric furnace was used to incinerate 1 g of a binder composition through approximately 3 hours of heating. Thereafter, approximately 5 mL of concentrated sulfuric acid was added to the incinerated binder composition, dissolution was caused to occur, and then approximately 5 mL of concentrated nitric acid was gradually added to cause wet decomposition. After decomposition, the acid was concentrated and was made up to a volume of 10 mL with ultrapure water. An ICP-AES apparatus (produced by SII NanoTechnology Inc.; model no. SPS-5100) was then used to measure the concentration of iron ions in the binder composition and determine the content of iron (Fe) as a transition metal.

### <Viscosity>

The viscosity of a binder composition was measured under conditions of 60 rpm and 25°C using a Brookfield B-type viscometer.

### <Output characteristics of all-solid-state secondary battery>

Three all-solid-state secondary battery cells were charged to 4.2 V by a 0.1C constant-current method and subsequently discharged to 3.0 V at 0.1C in order to determine the 0.1C discharge capacity. Next, the cells were charged to 4.2 V at 0.1C and subsequently discharged to 3.0 V at 2C in order to determine the 2C discharge capacity. An average value of the 0.1C discharge capacity for the three cells was taken to be a discharge capacity (a), an average value of the 2C discharge capacity for the three cells was taken to be a discharge capacity (b), and a ratio (capacity ratio) of the discharge capacity (b) relative to the discharge capacity (a) was calculated (= discharge capacity (b)/discharge capacity (a) × 100(%)) and was evaluated by the following standard. A larger value for the capacity ratio indicates that the all-solid-state secondary battery has better output characteristics.
A: Capacity ratio of 80% or more
B: Capacity ratio of not less than 70% and less than 80%
C: Capacity ratio of not less than 60% and less than 70%
D: Capacity ratio of less than 60%

### <Cycle characteristics of all-solid-state secondary battery>

An all-solid-state secondary battery was subjected to 50 cycles of charging and discharging at 25°C in which the all-solid-state secondary battery was charged from 3 V to 4.2 V at 0.2C and then discharged from 4.2 V to 3 V at 0.2C. A ratio of the 0.2C discharge capacity of the 50^{th} cycle relative to the 0.2C discharge capacity of the 1^{st} cycle was calculated as a percentage, and this value was taken to be the capacity maintenance rate and was evaluated by the following standard. A larger value for the capacity maintenance rate indicates that there is less reduction of discharge capacity and that the all-solid-state secondary battery has better cycle characteristics.
A: Capacity maintenance rate of 90% or more
B: Capacity maintenance rate of not less than 80% and less than 90%
C: Capacity maintenance rate of not less than 70% and less than 80%
D: Capacity maintenance rate of less than 70%

### (Example 1)

### <Production of binder composition>

### <<Production of water dispersion of polymer>>

A 1 L septum-equipped flask (reactor) including a stirrer was charged with 90 parts of deionized water and 0.5 parts of sodium lauryl sulfate as an emulsifier, the gas phase was purged with nitrogen gas, and heating was performed to 60°C. Thereafter, 0.25 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 65 parts of butyl acrylate, 23 parts of styrene, and 12 parts of acrylonitrile. The monomer composition was continuously added into the 1 L septum-equipped flask over 3 hours to perform polymerization. The reaction was carried out at 60°C during addition. Once the addition was complete, a further 3 hours of stirring was performed at 80°C to yield a water dispersion of a polymer A as a composition (Z). The obtained water dispersion of the polymer A was used to calculate the chemical composition of the polymer by the previously described method. The results are shown in Table 1.

### <<Water removal step>>

### {Step A-0: Production of pre-dehydration composition (Y)}

Next, an appropriate amount of butyl butyrate (SP value: 8.5) as an organic solvent was added to the water dispersion of the polymer A serving as the composition (Z) so as to obtain a mixture. The mixture was subsequently subjected to distillation under reduced pressure at 80°C so as to remove water and excess butyl butyrate from the mixture, and thereby yield a pre-dehydration composition (Y) (solid content concentration: 10%).

### {Step A-1: Treatment by desiccant}

Water was removed from the obtained pre-dehydration composition (Y) (solid content concentration: 10%) by adding 20 parts of a synthetic zeolite (molecular sieve 4A; powdered) to 100 parts of the pre-dehydration composition (Y) and performing 5 hours of stirring thereof at normal temperature (23°C) to yield a composition (X) (solid content concentration: 10%). The water content of the obtained composition (X) was measured to be 50 ppm.

### <<Transition metal removal step>>

The obtained composition (X) was passed through a prefilter (opening size: 10 µm) and was then filtered using a magnetic filter (produced by TOK ENGINEERING Co., Ltd.) under conditions of room temperature (25°C) and a magnetic flux density of 6,000 gauss to yield a binder composition (solid content concentration: 10%).

The transition metal content and viscosity of the obtained binder composition were measured. The results are shown in Table 1.

Note that the water content of the obtained binder composition was measured to be 50 ppm, and thus was confirmed to be the same as the water content of the above-described composition (X).

### <Production of slurry composition for positive electrode mixed material layer>

After mixing 70 parts of lithium cobalt oxide (number-average particle diameter: 11.5 µm) as a positive electrode active material, 25.5 parts of sulfide glass formed of Li₂S and P₂S₅ (Li₂S/P₂S₅ = 70 mol%/30 mol%; number-average particle diameter: 0.9 µm) as a solid electrolyte, 2.5 parts of acetylene black as a conductive material, and 2 parts (in terms of solid content) of the binder composition obtained as described above and further adding butyl butyrate as an organic solvent so as to adjust the solid content concentration to 80%, these materials were mixed for 60 minutes in a planetary mixer. Thereafter, further butyl butyrate was added to adjust the solid content concentration to 65%, and a further 10 minutes of mixing was subsequently performed to produce a slurry composition for a positive electrode mixed material layer.

### <Production of slurry composition for negative electrode mixed material layer>

After mixing 60 parts of graphite (number-average particle diameter: 20 µm) as a negative electrode active material, 36.5 parts of sulfide glass formed of Li₂S and P₂S₅ (Li₂S/P₂S₅ = 70 mol%/30 mol%; number-average particle diameter: 0.9 µm) as a solid electrolyte, 1.5 parts of acetylene black as a conductive material, and 2.5 parts (in terms of solid content) of the binder composition obtained as described above and further adding butyl butyrate as an organic solvent so as to adjust the solid content concentration to 65%, these materials were mixed for 60 minutes in a planetary mixer. Thereafter, further butyl butyrate was added to adjust the solid content concentration to 60%, and then further mixing was performed in the planetary mixer to produce a slurry composition for a negative electrode mixed material layer.

### <Production of slurry composition for solid electrolyte layer>

After mixing 100 parts of sulfide glass formed of Li₂S and P₂S₅ (Li₂S/P₂S₅ = 70 mol%/30 mol%; number-average particle diameter: 0.9 µm) as solid electrolyte particles and 2 parts (in terms of solid content) of the binder composition obtained as described above and further adding butyl butyrate as an organic solvent so as to adjust the solid content concentration to 65 mass% inside a glove box (moisture concentration: 0.6 mass ppm; oxygen concentration: 1.8 mass ppm) under an argon gas atmosphere, these materials were mixed for 60 minutes in a planetary mixer. Thereafter, further butyl butyrate was added to adjust the solid content concentration to 55%, and then further mixing was performed in the planetary mixer to produce a slurry composition for a solid electrolyte layer.

### <Production of all-solid-state secondary battery>

The slurry composition for a positive electrode mixed material layer was applied onto the surface of a current collector (aluminum foil; thickness: 20 µm) and was dried (60 minutes at temperature of 120°C) to form a positive electrode mixed material layer (solid electrolyte-containing layer) of 50 µm in thickness and obtain a positive electrode.

In addition, the slurry composition for a negative electrode mixed material layer was applied onto the surface of a separate current collector (copper foil; thickness: 15 µm) and was dried (60 minutes at temperature of 120°C) to form a negative electrode mixed material layer (solid electrolyte-containing layer) of 60 µm in thickness and obtain a negative electrode.

Next, the slurry composition for a solid electrolyte layer was applied onto imide film (thickness: 25 µm) and was dried (60 minutes at temperature of 120°C) to form a solid electrolyte layer (solid electrolyte-containing layer) of 150 µm in thickness. The solid electrolyte layer on the imide film and the positive electrode were affixed such that the solid electrolyte layer and the positive electrode mixed material layer were in contact and were then subjected to a pressing process such that 400 MPa of pressure (pressing pressure) was applied in order to transfer the solid electrolyte layer onto the positive electrode mixed material layer from the imide film and thereby obtain a solid electrolyte layer-equipped positive electrode.

This solid electrolyte layer-equipped positive electrode and the negative electrode were affixed such that the solid electrolyte layer of the solid electrolyte layer-equipped positive electrode and the negative electrode mixed material layer of the negative electrode were in contact and were then subjected to a pressing process such that 400 MPa of pressure (pressing pressure) was applied to the solid electrolyte layer of the solid electrolyte layer-equipped positive electrode in order to obtain an all-solid-state secondary battery. The thickness of the solid electrolyte layer in the all-solid-state secondary battery after pressing was 120 µm. Output characteristics and cycle characteristics were evaluated for this all-solid-state secondary battery. The results are shown in Table 2.

### (Examples 2 to 6)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that the amount of the desiccant used in step A-1 of the water removal step and/or the magnetic flux density of the magnetic filter used in the transition metal removal step in production of the binder composition in Example 1 were changed as indicated in Table 2. The results are shown in Tables 1 and 2.

### (Example 7)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that in production of the binder composition in Example 1, monomers used in the monomer composition in production of a water dispersion of a polymer were changed from 65 parts of butyl acrylate, 23 parts of styrene, and 12 parts of acrylonitrile to 65 parts of butyl acrylate, 10 parts of styrene, 15 parts of methyl methacrylate, and 10 parts of acrylonitrile so as to yield a water dispersion of a polymer B as a composition (Z). The results are shown in Tables 1 and 2.

### (Example 8)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that production of a water dispersion of a polymer and step A-0 (production of pre-dehydration composition (Y)) of the water removal step were performed by the following method in production of the binder composition in Example 1. The results are shown in Tables 1 and 2.

### <Production of water dispersion of polymer>

### <<Production of copolymer latex>>

A reactor was charged with 2 parts of potassium oleate as an emulsifier, 0.1 parts of potassium phosphate as a stabilizer, and 150 parts of water, and then 15 parts of acrylonitrile, 45 parts of 1,3-butadiene, 40 parts of butyl acrylate (BA), and 0.31 parts of t-dodecyl mercaptan as a molecular weight modifier were further added. Emulsion polymerization was initiated at 10°C in the presence of 0.015 parts of ferrous sulfate as an activator and 0.05 parts of paramenthane hydroperoxide as a polymerization initiator. At the point at which the polymerization conversion rate reached 85%, 0.2 parts of hydroxylamine sulfate was added per 100 parts of monomer to end polymerization.

Once polymerization had ended, heating was performed, unreacted monomer was collected through steam distillation under reduced pressure at 70°C, and then 2 parts of an alkylated phenol was added as an antioxidant to yield a copolymer latex.

### <<Hydrogenation>>

A 1 L autoclave equipped with a stirrer was charged with 400 mL of the obtained copolymer latex (total solid content: 48 g), and then nitrogen gas was passed for 10 minutes in order to remove dissolved oxygen in the copolymer latex. Thereafter, 50 mg of palladium acetate as a hydrogenation reaction catalyst was dissolved in 180 mL of water to which nitric acid had been added in an amount of 4 molar equivalents relative to the Pd, and the resultant solution was then added into the autoclave. Purging of the system with hydrogen gas was performed twice, and then the contents of the autoclave were heated to 50°C in a state in which the pressure was raised to 3 MPa with hydrogen gas, and a hydrogenation reaction was carried out for 6 hours.

The contents were restored to normal temperature, the system was converted to a nitrogen atmosphere, and then an evaporator was used to perform concentrating to a solid content concentration of 40%, and thereby yield a water dispersion of a polymer C (hydrogenated nitrile rubber) as a composition (Z). The obtained water dispersion of the polymer C was used to calculate the chemical composition of the polymer by the previously described method. The results are shown in Table 1.

### <Water removal step>

### <<Step A-0: Production of pre-dehydration composition (Y)>>

Next, an appropriate amount of butyl butyrate was added to the water dispersion of the polymer C serving as the composition (Z) so as to obtain a mixture. The mixture was subsequently subjected to distillation under reduced pressure at 80°C so as to remove water and excess butyl butyrate from the mixture, and thereby yield a pre-dehydration composition (Y) (solid content concentration: 10%).

### (Example 9)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that production of a water dispersion of a polymer D and step A-0 (production of pre-dehydration composition (Y)) of the water removal step were performed by the following method in production of the binder composition in Example 1. The results are shown in Tables 1 and 2.

### <Production of water dispersion of polymer D>

A 1 L septum-equipped flask (reactor) including a stirrer was charged with 90 parts of deionized water and 0.5 parts of sodium lauryl sulfate as an emulsifier, the gas phase was purged with nitrogen gas, and heating was performed to 60°C. Thereafter, 0.25 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, 89.5 parts of butyl acrylate, 10 parts of acrylonitrile, and 0.5 parts of allyl methacrylate. The monomer composition was continuously added into the 1 L septum-equipped flask over 3 hours to perform polymerization. The reaction was carried out at 60°C during addition. Once the addition was complete, a further 3 hours of stirring was performed at 80°C to yield a water dispersion of a polymer D. The obtained water dispersion of the polymer D was used to calculate the chemical composition of the polymer by the previously described method. The results are shown in Table 1.

### <Water removal step>

### <<Step A-0: Production of pre-dehydration composition (Y)>>

Next, the water dispersion of the polymer A obtained in Example 1 and the water dispersion of the polymer D described above were mixed such that polymer A:polymer D = 50:50 (mass ratio) to yield a composition (Z), and then an appropriate amount of butyl butyrate (SP value: 8.1) as an organic solvent was added to the composition (Z) so as to obtain a mixture. The mixture was subsequently subjected to distillation under reduced pressure at 80°C so as to remove water and excess butyl butyrate from the mixture, and thereby yield a pre-dehydration composition (Y) (solid content concentration: 10%).

### (Examples 10 to 12)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that the organic solvent used in step A-0 (production of pre-dehydration composition (Y)) of the water removal step in production of the binder composition in Example 1 was changed from butyl butyrate to an organic solvent indicated in Table 3, and the organic solvent used in production of each of the slurry composition for a positive electrode mixed material layer, the slurry composition for a negative electrode mixed material layer, and the slurry composition for a solid electrolyte layer was also changed from butyl butyrate to an organic solvent indicated in Table 3. The results are shown in Tables 1 and 3.

### (Examples 13 to 16)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that the desiccant used in step A-1 of the water removal step in production of the binder composition in Example 1 was changed from a synthetic zeolite (molecular sieve 4A) to a desiccant indicated in Table 3. The results are shown in Tables 1 and 3.

Note that among synthetic zeolites indicated in Table 3, molecular sieve 13X and molecular sieve 3A had a powdered or bead-like form and ZEOflair 110 produced by Zeochem had a powdered form. Moreover, silica gel A-type indicated in Table 3 had a bead-like form.

### (Comparative Example 1)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that step A-1 (treatment by desiccant) of the water removal step and the transition metal removal step were not implemented in production of the binder composition of Example 1 and that the pre-dehydration composition (Y) was used in that form as the composition (X) and the binder composition. The results are shown in Tables 1 and 3.

### (Comparative Example 2)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that the transition metal removal step was not implemented in production of the binder composition in Example 1 and that the composition (X) was used in that form as the binder composition. The results are shown in Tables 1 and 3.

### (Comparative Example 3)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that step A-1 (treatment by desiccant) of the water removal step was not implemented in production of the binder composition of Example 1 and that the pre-dehydration composition (Y) was subjected to the transition metal removal step as the composition (X). The results are shown in Tables 1 and 3.

### (Comparative Example 4)

A binder composition, a slurry composition for a positive electrode mixed material layer, a slurry composition for a negative electrode mixed material layer, a slurry composition for a solid electrolyte layer, and an all-solid-state secondary battery were produced and various measurements and evaluations were performed in the same way as in Example 1 with the exception that the desiccant used in step A-1 (treatment by desiccant) of the water removal step in production of the binder composition in Example 1 was changed from a synthetic zeolite (molecular sieve 4A) to calcium chloride. The results are shown in Tables 1 and 3.

In Table 1, shown below:
"BA" indicates butyl acrylate unit;
"ST" indicates styrene unit;
"MMA" indicates methyl methacrylate unit;
"AN" indicates acrylonitrile unit;
"H-BD" indicates hydrogenated 1,3-butadiene unit; and
"AMA" indicates allyl methacrylate unit.

In Tables 2 and 3, shown below: "MS" indicates molecular sieve.

**Table 1**

| | | Examples 1 to 6 and 9 to 16, Comparative Examples 1 to 4 | Example 7 | Example 8 | Example 9 |
|---|---|---|---|---|---|
| Polymer | | Polymer A | Polymer B | Polymer C | Polymer D |
| Chemical composition | BA | 65 | 65 | 40 | 89.5 |
| | St | 23 | 10 | - | - |
| | MMA | - | 15 | - | - |
| | AN | 12 | 10 | 15 | 10 |
| | H-BD | - | - | 45 | - |
| | AMA | - | - | - | 0.5 |

**Table 2**

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Water removal step | Step A-0: Production of pre-dehydration composition (Y) | Polymer | | Polymer A | Polymer A | Polymer A | Polymer A | Polymer A | Polymer A | Polymer B | Polymer C | Polymer A: Polymer D = 50:50 |
| | | Organic solvent | Type | Butyl butyrate | Butyl butyrate | Butyl butyrate | Butyl butyrate | Butyl butyrate | Butyl butyrate | Butyl butyrate | Butyl butyrate | Butyl butyrate |
| | | | SP value | 8.1 | 8.1 | 8.1 | 8.1 | 8.1 | 8.1 | 8.1 | 8.1 | 8.1 |
| | Step A-1: Treatment by desiccant | Implementation | | Yes | Yes | Yes | Yes | Yes | Yes | Yes | Yes | Yes |
| | | Desiccant | Type | MS 4A | MS 4A | MS 4A | MS 4A | MS 4A | MS 4A | MS 4A | MS 4A | MS 4A |
| | | | Used amount relative to 100 parts by mass of pre-dehydration composition (Y) [parts by mass] | 20 | 10 | 40 | 5 | 50 | 20 | 20 | 20 | 20 |
| | | Water content of composition (X) [ppm] | | 50 | 70 | 30 | 180 | 10 | 50 | 50 | 50 | 50 |
| Transition metal removal step | | Implementation | | Yes | Yes | Yes | Yes | Yes | Yes | Yes | Yes | Yes |
| | | Magnetic flux density [gauss] | | 6000 | 5000 | 8000 | 3000 | 8000 | 1000 | 6000 | 6000 | 6000 |
| Binder composition | | Transition metal (Fe) content [ppm] | | 0.1 | 0.1 | 0.1 | 0.1 | 1.1 | 4.5 | 0.1 | 0.1 | 0.1 |
| | | Solid content concentration [mass%] | | 10 | 10 | 10 | 10 | 10 | 10 | 10 | 10 | 10 |
| | | Viscosity [mPa.s] | | 2000 | 2000 | 2000 | 2000 | 2000 | 2000 | 2200 | 1200 | 400 |
| Evaluation | | Output characteristics | | A | A | A | B | A | A | A | A | A |
| | | Cycle characteristics | | A | A | A | A | B | B | A | A | A |

**Table 3**

| | | | | Example 10 | Example 11 | Example 12 | Example 13 | Example 14 | Example 15 | Example 16 | Comparative Example 1 | Comparative Example 2 | Comparative Example 3 | Comparative Example 4 |
|---|---|---|---|---|---|---|---|---|---|---|---|---|---|---|
| Water removal step | Step A-0: Production of pre-dehydration composition (Y) | Polymer | | Polymer A | Polymer A | Polymer A | Polymer A | Polymer A | Polymer A | Polymer A | Polymer A | Polymer A | Polymer A | Polymer A |
| | | Organic solvent | Type | Xylene | Diisobutyl ketone | Mesitylene | Butyl butyrate | Butyl butyrate | Butyl butyrate | Butyl butyrate | Butyl butyrate | Butyl butyrate | Butyl butyrate | Butyl butyrate |
| | | | SP value | 8.3 | 7.8 | 8.5 | 8.1 | 8.1 | 8.1 | 8.1 | 8.1 | 8.1 | 8.1 | 8.1 |
| | Step A-1: Treatment by desiccant | Implementation | | Yes | Yes | Yes | Yes | Yes | Yes | Yes | No | Yes | No | Yes |
| | | Desiccant | Type | MS 4A | MS 4A | MS 4A | MS 13X | MS 3A | ZEOflair 110 | Silica gel A-type | - | MS 4A | - | Calcium chloride |
| | | | Used amount relative to 100 parts by mass of pre-dehydration composition (Y) [parts by mass] | 20 | 20 | 20 | 20 | 20 | 20 | 20 | - | 20 | - | 20 |
| | | Water content of composition (X) [ppm] | | 80 | 60 | 50 | 50 | 50 | 50 | 50 | 500 | 50 | 500 | 300 |
| Transition metal removal step | | Implementation | | Yes | Yes | Yes | Yes | Yes | Yes | Yes | No | No | Yes | Yes |
| | | Magnetic flux density [gauss] | | 6000 | 6000 | 6000 | 6000 | 6000 | 6000 | 6000 | - | - | 5500 | 6000 |
| Binder composition | | Transition metal (Fe) content [ppm] | | 0.1 | 0.1 | 0.1 | 0.1 | 0.1 | 0.1 | 0.1 | - | 6 | 0.1 | 0.1 |
| | | Solid content concentration [mass%] | | 10 | 10 | 10 | 10 | 10 | 10 | 10 | 10 | 10 | 10 | 10 |
| | | Viscosity [mPa.s] | | 2200 | 2100 | 1900 | 2000 | 2000 | 2000 | 2000 | 2000 | 2000 | 2000 | 2000 |
| Evaluation | | Output characteristics | | A | A | A | A | A | A | A | D | C | D | D |
| | | Cycle characteristics | | A | A | A | A | A | A | A | D | D | C | C |

It can be seen from Tables 2 and 3 that through the methods of producing a binder composition for an all-solid-state secondary battery of Examples 1 to 16, which each include a water removal step of using a specific desiccant to obtain a composition (X) containing a polymer and an organic solvent and having a water content of 200 ppm or less and a transition metal removal step of magnetically removing transition metal contained in the composition (X), it is possible to produce a binder composition for an all-solid-state secondary battery with which it is possible to form a solid electrolyte-containing layer that can cause an all-solid-state secondary battery to display excellent output characteristics and cycle characteristics.

In contrast, it can be seen that in the methods of producing a binder composition for an all-solid-state secondary battery of Comparative Examples 1 to 3 in which either or both of the above-described water removal step and transition metal removal step are absent, output characteristics and cycle characteristics of an all-solid-state secondary battery that is produced using the produced binder composition are poor.

It can also be seen that even in the method of producing a binder composition for an all-solid-state secondary battery of Comparative Example 4 in which a desiccant other than the specific desiccant is used in a water removal step, output characteristics and cycle characteristics of an all-solid-state secondary battery that is produced using the produced binder composition are poor.

### INDUSTRIAL APPLICABILITY

According to the present disclosure, it is possible to provide a method of producing a binder composition for an all-solid-state secondary battery with which it is possible to form a solid electrolyte-containing layer that can cause an all-solid-state secondary battery to display excellent output characteristics and cycle characteristics.

Moreover, according to the present disclosure, it is possible to provide a method of producing a slurry composition for an all-solid-state secondary battery with which it is possible to form a solid electrolyte-containing layer that can cause an all-solid-state secondary battery to display excellent output characteristics and cycle characteristics.

Furthermore, according to the present disclosure, it is possible to provide a method of producing a solid electrolyte-containing layer that can cause an all-solid-state secondary battery to display excellent output characteristics and cycle characteristics.

Also, according to the present disclosure, it is possible to provide a method of producing an all-solid-state secondary battery that can display excellent output characteristics and cycle characteristics.

## Claims

1. A method of producing a binder composition for an all-solid-state secondary battery that contains a polymer and an organic solvent, comprising:
a water removal step of using a desiccant that contains either or both of a group 13 element and a group 14 element to obtain a composition (X) that contains the polymer and the organic solvent and has a water content of 200 ppm or less; and
a transition metal removal step of magnetically removing transition metal contained in the composition (X) to obtain the binder composition for an all-solid-state secondary battery.

2. The method of producing a binder composition for an all-solid-state secondary battery according to claim 1, wherein transition metal content of the binder composition for an all-solid-state secondary battery is 5 ppm or less.

3. The method of producing a binder composition for an all-solid-state secondary battery according to claim 1 or 2, wherein the desiccant includes either or both of an -O-Si-O- structure and an -O-Al-O- structure.

4. The method of producing a binder composition for an all-solid-state secondary battery according to any one of claims 1 to 3, wherein the organic solvent has an SP value of not less than 5 and not more than 9.5.

5. The method of producing a binder composition for an all-solid-state secondary battery according to any one of claims 1 to 4, wherein the polymer includes one or more selected from the group consisting of a vinyl cyanide monomer unit, a (meth)acrylic acid ester monomer unit, an aromatic vinyl monomer unit, an aliphatic conjugated diene monomer unit, and an alkylene structural unit.

6. The method of producing a binder composition for an all-solid-state secondary battery according to any one of claims 1 to 5, wherein the water removal step includes a step of removing water from a pre-dehydration composition (Y) that contains the polymer and the organic solvent using the desiccant to obtain the composition (X).

7. A method of producing a slurry composition for an all-solid-state secondary battery comprising a step of producing a slurry composition for an all-solid-state secondary battery containing: a solid electrolyte; and a binder composition for an all-solid-state secondary battery produced by the method of producing a binder composition for an all-solid-state secondary battery according to any one of claims 1 to 6.

8. A method of producing a solid electrolyte-containing layer comprising a step of forming a solid electrolyte-containing layer using a slurry composition for an all-solid-state secondary battery produced by the method of producing a slurry composition for an all-solid-state secondary battery according to claim 7.

9. A method of producing an all-solid-state secondary battery comprising a step of producing an all-solid-state secondary battery using a solid electrolyte-containing layer produced by the method of producing a solid electrolyte-containing layer according to claim 8.
